# EUROPÄISCHE PATENTANMELDUNG

(11) **EP 0 845 209 A1**
(43) Veröffentlichungstag der Anmeldung: **03.06.1998**
(21) Anmeldenummer: 97117594.8
(22) Anmeldetag: 10.10.1997
(51) Int. Cl.: A01K 85/16, A01K 85/00

(54) **Kunstköderanordnung für den Angelsport**

(30) Priorität: 22.11.1996 DE 29621451 U
(71) Anmelder: Menne, Holger, 41468 Neuss (DE)
(72) Erfinder: Menne, Holger, 41468 Neuss (DE)
(74) Vertreter: Paul, Dieter-Alfred, Dipl.-Ing.

(57) **Zusammenfassung**

Die Erfindung betrifft eine Kunstköderanordnung für den Angelsport mit einem an einer Angelleine (1) befestigbaren Grundkörper (2), der etwa fischförmig ausgebildet ist bzw. Mittel zur Anbringung eines toten Köderfischs, Gummifischs, Twisters o. dgl. aufweist, und ist dadurch gekennzeichnet, daß der Grundkörper (2) als Hohlkörper aus insbesondere Kunststoff ausgebildet ist, und der Hohlraum (3) des Grundkörpers (2) durch wenigstens eine verschließbare Öffnung (4) von außen mit einer Flüssigkeit o. dgl. befüllbar ist, um die Dichte des Grundkörpers (2) einzustellen.

## Beschreibung

Die Erfindung betrifft eine Kunstköderanordnung für den Angelsport mit einem an einer Angelleine befestigbaren Grundkörper, der etwa fischförmig ausgebildet ist bzw. Mittel zur Anbringung eines toten Köderfischs, Gummifischs, Twisters o. dgl. aufweist.

Kunststoffköder für den Angelsport sind in unterschiedlichen Ausführungsformen bekannt. Beispielsweise gibt es sog. Wobbler, bei denen es sich um Fischnachbildungen aus Kunststoff handelt, an denen ein oder mehrere Angelhaken befestigbar sind. Weiterhin ist bekannt, einen toten Köderfisch, weichen Gummifisch oder Twister als Köder auf einen Speer aufzuspießen. Diese Ausführungsform hat gegenüber dem Wobbler den Vorteil, daß sich der tote Köderfisch und Weichgummifisch im Wasser bewegen und somit ziemlich realitätsnah sind.

Nachteilig an der Verwendung von Ködern aus Kunststoff ist, daß sie in der Regel auf dem Wasser schwimmen und durch Bleigewichte beschwert werden müssen, damit sie abtauchen. Die genaue Tauchtiefe ist aber vom Angler kaum feststellbar, so daß der Köder nur in seltenen Fällen genau in der Tiefe schwebt, die er beim Angeln von bestimmten Fischarten einnehmen sollte.

Aufgabe der Erfindung ist es daher, eine Kunstköderanordnung der eingangs genannten Art so auszubilden, daß die Wassertiefe, in der sie einen Schwebezustand annehmen, auf einfache Weise einstellbar ist.

Diese Aufgabe ist erfindungsgemäß dadurch gelöst, daß der Grundkörper als Hohlkörper ausgebildet und der Hohlraum des Grundkörpers durch wenigstens eine verschließbare Öffnung von außen mit einer Flüssigkeit o. dgl. befüllbar ist, um die Dichte des Grundkörpers einzustellen.

Erfindungsgemäß wird somit ein Hohlkörper verwendet, der eine solche Dichte besitzt, daß er auf dem Wasser schwimmt bzw. im Bereich der Wasseroberfläche schwebt, jedoch durch Befüllen mit beispielsweise Wasser beschwert werden kann, so daß er absinkt Durch geeignete Wahl der Füllmenge ist somit die Wassertiefe, in welcher die Kunstköderanordnung letztendlich ihren Schwebezustand einnimmt, praktisch frei einstellbar.

Zweckmäßigerweise ist dabei vorgesehen, daß der Füllstand des Hohlkörpers von außen ablesbar ist, wobei vorzugsweise eine Skalierung vorgesehen ist, welche eine dem Füllstand entsprechende Wassertiefe anzeigt, in der die Kunstköderanordnung ihren Schwebezustand einnimmt. Durch diese Maßnahme hat der Angler die Möglichkeit, entsprechend der Fischart, die er angeln möchte, und der Tiefe des Gewässers die Eintauchtiefe des Köders ziemlich exakt einzustellen.

Die Öffnung ist vorzugsweise durch einen Kunststoffstöpsel verschließbar. Es ist jedoch auch möglich, beispielsweise einen Schraubverschluß zu verwenden.

In bevorzugter Weise wird der Grundkörper mit einer Spritze, beispielsweise einer 10̸- oder 20̸ml-Spritze, wie sie für den Medizinbereich üblich ist, befüllt, wodurch sich der Füllstand sehr genau einstellen läßt. Dazu weist die Öffnung einen Durchmesser von maximal 5 mm auf.

Um den Grundkörper auf einfache Weise wieder leicht entleeren zu können, ist in Ausbildung der Erfindung vorgesehen, daß Öffnungen auf gegenüberliegenden Seiten des Grundkörpers vorgesehen sind, die zum Entleeren des Hohlraums geöffnet werden, so daß die Flüssigkeit durch eine Öffnung ausgeschüttet werden kann, wobei durch die andere Öffnung Luft nachströmt.

Zweckmäßigerweise ist der Grundkörper so ausgebildet, daß er im Wasser eine im wesentlichen definierte Lage einnimmt, was beispielsweise durch eine entsprechende Gewichtsverteilung bzw. durch Anordnung von Finnen bzw. Flossen bzw. einer Schaufel erreicht werden kann. Dann kann im oberen Bereich des Grundkörpers eine Kammer zur Aufnahme eines Lockmittels ausgebildet sein. Von dieser Kammer führt eine Öffnung nach außen, die so klein ist, daß kein Wasser in die Kammer eintreten kann, wenn der Grundkörper ins Wasser eintaucht, jedoch Lockmittel, die in die Kammer durch die Öffnung eingefüllt worden sind, unter Wasser austreten können, wodurch insbesondere Raubfische angelockt werden können.

Der Grundkörper kann als Hohlkörperwobbler ausgebildet sein, an dem mehrere Angelhaken befestigt bzw. befestigbar sind.

Alternativ ist es möglich, an dem hohlen Grundkörper ein Speerelement anzubringen und auf dieses Speerelement, das insbesondere mit Widerhaken versehen sein kann, in an sich bekannter Weise einen toten Köderfisch, Gummifisch, Twister o. dgl. aufzustecken. In dem letzteren Fall ist das Speerelement vorzugsweise über ein Wirbelgelenk bewegbar mit dem Grundkörper verbunden, wodurch sich die Köderanordnung im Wasser wie ein lebendiger Fisch bewegt. Zweckmäßigerweise ist dabei der Grundkörper als Fischkopf ausgebildet, dessen Augen durch die Öffnungen gebildet werden.

In Ausbildung der Erfindung ist weiterhin vorgesehen, daß in dem Grundkörper ein Kanal ausgebildet ist, durch den derjenige Endabschnitt der Angelleine, an dem ein Angelhaken angebracht bzw. anbringbar ist, geführt werden kann. Diese Ausbildung hat den Vorteil, daß der Grundkörper durch einen kapitalen Fisch nicht belastet wird.

Hinsichtlich weiterer vorteilhafter Ausgestaltungen der Erfindung wird auf die Unteransprüche sowie die nachfolgende Beschreibung von Ausführungsbeispielen der erfindungsgemäßen Köderanordnung verwiesen. In der Zeichnung zeigt:
- Figur 1: eine erste, als Hohlkörperwobbler ausgebildete Ausführungsform einer Kunstköderanordnung gemäß der Erfindung,
- Figur 2: eine zweite Ausführungsform einer erfindungsgemäßen Kunstköderanordnung und
- Figur 3: eine dritte Ausführungsform einer erfindungsgemäßen Köderanordnung.

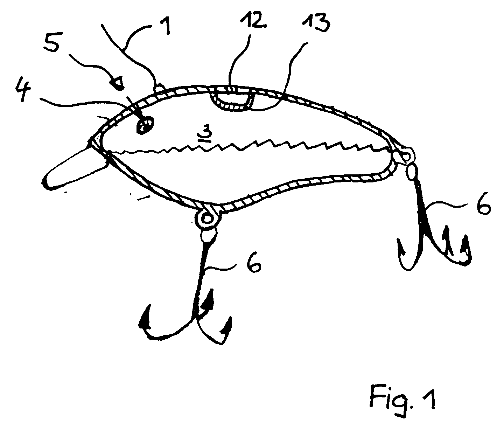

In Figur 1 ist eine erste, als Hohlkörperwobbler ausgebildete Kunstköderanordnung gemäß der Erfindung dargestellt. Diese umfaßt einen an einer Angelleine 1 befestigbaren Grundkörper 2, der etwa fischförmig ausgebildet ist und zwei Angelhaken 6 trägt. Der Grundkörper 2 besteht aus Hartkunststoff und ist hohl ausgebildet, wobei die Dichte des Grundkörpers 2 im Bereich der Dichte von Wasser liegt, so daß der Grundkörper 2 auf dem Wasser schwimmt bzw. dicht an der Wasseroberfläche im Wasser schwebt. Der Hohlraum 3 des Grundkörpers 2 ist durch mehrere verschließbare Öffnungen 4 von außen mit einer Flüssigkeit wie beispielsweise Wasser, oder auch Sand o. dgl. befüllbar, um die Dichte des Grundkörpers 2 zu erhöhen und so die Wassertiefe, in der die Kunstköderanordnung im Wasser einen Schwebezustand einnimmt, einzustellen. Je mehr Flüssigkeit sich in dem Hohlraum 3 befindet, desto tiefer sinkt die Kunstköderanordnung im Wasser, bevor sie ihren Schwebezustand einnimmt.

In der Zeichnung nicht dargestellt ist, daß an dem Grundkörper 2 außenseitig eine Skalierung vorgesehen ist, durch die der Füllstand des Hohlraums 3 von außen ablesbar ist, wobei die Skalierung eine dem Füllstand entsprechende Wassertiefe anzeigt, in der die Kunstköderanordnung ihren Schwebezustand einnimmt.

Die Öffnungen 4 sind jeweils durch einen Stöpsel 5 verschließbar, und sie besitzen einen Durchmesser von maximal 5 mm, so daß der Grundkörper 2 mit einer Spritze befüllbar ist, wodurch eine hohe Füllgenauigkeit erreicht werden kann.

Die Gewichtsverteilung und Ausbildung des Grundkörpers 2 sind so gewählt, daß der Grundkörper 2 im Wasser eine definierte Lage einnimmt, wie sie in Figur 1 dargestellt ist. Im in dieser Lage oberen Bereich ist im Grundkörper 2 eine abgeschlossene Kammer 13 ausgebildet, die durch eine Öffnung 12 von außen zugänglich ist. Die Größe dieser Öffnung 12 ist so klein gewählt, daß durch sie beim Eintauchen des Hohlkörpers 2 ins Wasser kein Wasser in die Kammer 13 eindringt, auch wenn die Öffnung 12 nicht verschlossen ist. Durch diese Ausbildung wird die Möglichkeit geschaffen, in die Kammer 13 gasförmige Lockmittel einzufüllen, die im Wasser durch die Öffnung 12 aus dem Grundkörper 2 austreten, um insbesondere Raubfische anzulocken.

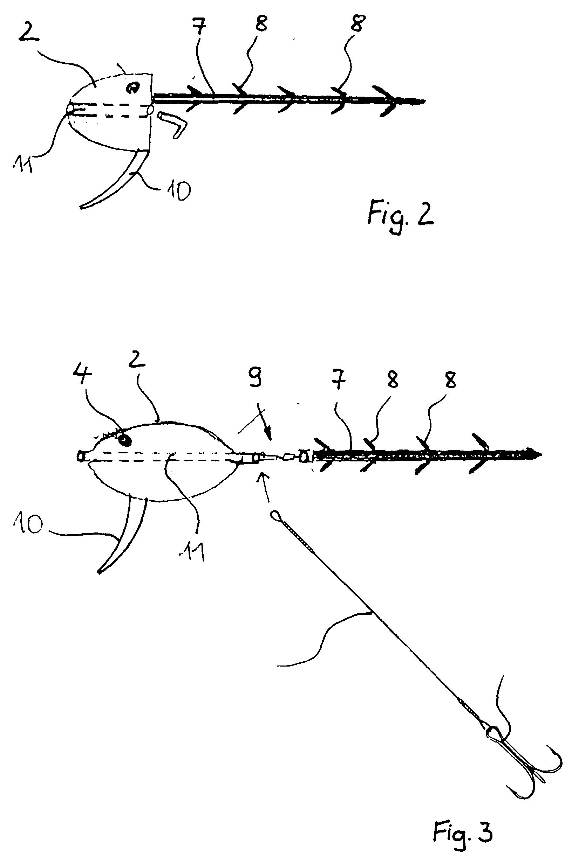

In Figur 2 ist eine weitere Ausführungsform einer erfindungsgemäßen Kunstköderanordnung dargestellt. Bei dieser Ausführungsform ist der Grundkörper 2 ebenfalls hohl, aber deutlich kleiner als bei der ersten Ausführungsform ausgebildet und trägt an seiner Rückseite ein Speerelement 7, auf das ein toter Köderfisch, Gummifisch, Twister o. dgl. aufgeschoben werden kann. An dem Speerelement 7 vorgesehene Widerhaken 8 sorgen dabei für eine sichere Fixierung.

Bei der in Figur 2 dargestellten Ausführungsform ist der Grundkörper 2 fischkopfartig ausgebildet, wobei die Öffnungen 4 zum Befüllen und Entleeren des Grundkörpers 2 die Augen dieses Fischkopfs bilden.

Damit der Grundkörper 2 im Wasser eine definierte Lage einnimmt, weist er an seiner Unterseite eine Schaufel 10̸ auf.

Die in Figur 3 dargestellte Köderanordnung entspricht im wesentlichen der in Figur 2 dargestellten Ausführungsform, jedoch ist hier das Speerelement 7 nicht starr, sondern über ein Wirbelgelenk 9 im wesentlichen frei bewegbar mit dem Grundkörper 2 verbunden. Hierdurch wird erreicht, daß die Köderanordnung in sich beweglich ist und sich damit im Wasser ähnlich wie ein lebendiger Fisch verhält.

Der Grundkörper 2 ist von seiner Vorderseite zur Rückseite hin von einem Kanal 11 durchsetzt, durch den die Angelleine so gezogen werden kann, daß ihr freies, den Angelhaken 6 tragendes Ende rückseitig aus dem Grundkörper 2 austritt. Durch diese Ausbildung wird erreicht, daß ein kapitaler Fisch den Grundkörper 2 nicht belastet.

Auch bei den in den Figuren 2 und 3 dargestellten Ausführungsformen ist am Hohlkörper 2 jeweils eine Skalierung vorgesehen, die den Füllstand des Hohlraums anzeigt.

## Patentansprüche

1. Kunstköderanordnung für den Angelsport mit einem an einer Angelleine (1) befestigbaren Grundkörper (2), der etwa fischförmig ausgebildet ist bzw. Mittel zur Anbringung eines toten Köderfischs, Gummifischs, Twisters o. dgl. aufweist,
dadurch gekennzeichnet, daß der Grundkörper (2) als Hohlkörper aus insbesondere Kunststoff ausgebildet ist, und der Hohlraum (3) des Grundkörpers (2) durch wenigstens eine verschließbare Öffnung (4) von außen mit einer Flüssigkeit o. dgl. befüllbar ist, um die Dichte des Grundkörpers (2) einzustellen.

2. Kunstköderanordnung nach Anspruch 1,
dadurch gekennzeichnet, daß die wenigstens eine Öffnung (4) durch einen Stöpsel (5) verschließbar ist.

3. Kunstköderanordnung nach Anspruch 1 oder 2,
dadurch gekennzeichnet, daß die Öffnung (4) einen Durchmesser von maximal 5 mm besitzt, so daß der Grundkörper (2) mit einer Spritze befüllbar ist.

4. Kunstköderanordnung nach einem der Ansprüche 1 bis 3,
dadurch gekennzeichnet, daß mehrere Öffnungen (4) auf einander gegenüberliegenden Seiten des Grundkörpers (2) vorgesehen sind, die zum Entleeren des Hohlraums (3) geöffnet werden.

5. Kunstköderanordnung nach einem der Ansprüche 1 bis 4,
dadurch gekennzeichnet, daß der Grundkörper (2) so ausgebildet ist, daß er im Wasser eine im wesentlichen definierte Lage einnimmt.

6. Kunstköderanordnung nach Anspruch 5,
dadurch gekennzeichnet, daß im oberen Bereich des Grundkörpers (2) eine Kammer (13) zur Aufnahme eines Lockmittels ausgebildet ist, die eine Öffnung (12) aufweist, durch die eingefüllte Lockmittel unter Wasser aus dem Grundkörper (2) austreten können.

7. Kunstköderanordnung nach einem der Ansprüche 1 bis 6,
dadurch gekennzeichnet, daß der Grundkörper (2) als Hohlkörperwobbler ausgebildet ist, an dem wenigstens ein Angelhaken (6) befestigt bzw. befestigbar ist.

8. Kunstköderanordnung nach einem der Ansprüche 1 bis 7,
dadurch gekennzeichnet, daß an dem Grundkörper (2) ein Speerelement (7) anbringbar oder angebracht ist, auf das ein toter Köderfisch, Gummifisch, Twister o. dgl. aufsteckbar ist, wobei das Speerelement (7) vorzugsweise Widerhaken (8) aufweist.

9. Kunstköderanordnung nach Anspruch 8,
dadurch gekennzeichnet, daß das Speerelement (7) insbesondere über ein Wirbelgelenk (9) bewegbar mit dem Grundkörper (2) verbunden ist.

10. Kunstköderanordnung nach Anspruch 8 oder 9,
dadurch gekennzeichnet, daß in dem Grundkörper (2) ein Kanal (10̸) ausgebildet ist, durch den derjenige Endabschnitt der Angelleine (1), an dem ein Angelhaken (1) angebracht bzw. anbringbar ist, geführt werden kann.

11. Kunstköderanordnung nach einem der Ansprüche 1 bis 10̸,
dadurch gekennzeichnet, daß der Grundkörper (2) zumindest bereichsweise einem Fischkopf nachempfunden ausgebildet ist und die Öffnungen (4) die Augen dieses Fischkopfs bilden.

12. Kunstköderanordnung nach Anspruch 1 bis 11,
dadurch gekennzeichnet, daß der Füllstand des Grundkörpers (2) von außen ablesbar ist, wobei vorzugsweise eine Skalierung vorgesehen ist, welche eine dem Füllstand entsprechende Wassertiefe anzeigt, in der die Kunstköderanordnung einen Schwebezustand einnimmt.
